Europäisches Patentamt

European Patent Office

Office européen des brevets

(11) Veröffentlichungsnummer: **0 314 159**
**A1**

## (12) EUROPÄISCHE PATENTANMELDUNG

(21) Anmeldenummer: 88117996.4

(22) Anmeldetag: 28.10.88

(51) Int. Cl.4: **C05F 13/00 , C05F 3/00**

(30) Priorität: 29.10.87 YU 1968/87

(43) Veröffentlichungstag der Anmeldung:
**03.05.89 Patentblatt 89/18**

(84) Benannte Vertragsstaaten:
**AT BE DE GB IT NL**

(71) Anmelder: **KOVINOTEHNA CELJE n.sol.o.**
**TOZD Inzeiring n.sub.o.**
**Gubceva 1**
**YU-63000 Celje(YU)**

(72) Erfinder: **Pajenk, Francek, Dr.**
**Reboljeva 3**
**YU-61000 Ljubljana(YU)**

(74) Vertreter: **Hansen, Bernd, Dr.rer.nat. et al**
**Hoffmann, Eitle & Partner Patentanwälte**
**Arabellastrasse 4 Postfach 81 04 20**
**D-8000 München 81(DE)**

(54) Verfahren zur Verarbeitung von animalischen Exkrementen, ein gemaess diesem Verfahren erhaltenes hochwertiges Duengemittel sowie dessen Anwendung.

(57) Es wird ein neues Verfahren zur Verarbeitung von animalischen, insbesondere Schweine- und Geflügelexkrementen, in ein hochwertiges Düngemittel dargestellt, gemäss welchem die animalischen Exkremente bei einer Temperatur von bis zu 50°C mit einer organischen Komponente auf der Basis von Huminsäuren und/oder Zellulose, die bevorzugt auf eine Feuchtigkeit von bis zu 25 % vorgetrocknet und zu einer Fraktion von bis zu 4 mm vermahlen wurde, und ggf. mit an Makro- und Mikroelementen, CaO und hochabsorptiven Tonen reichen Reagenzien versetzt wurde, mässig verrührt werden. Das Produkt wird granuliert und bei max. 60°C getrocknet.

Das neue Verfahren löst ein dringendes ökologisches, wirtschaftliches und gesundheitliche Problem der animalischen Exkremente und ergibt ein Düngemittel, das die Fruchtbarkeit des Bodens und die Ernte günstig beeinflusst und ausserdem die Grund- und Oberflächenwässer nicht verunreinigt, da es umweltfreundlich ist, und keine Ablage für pathogene Bakterien und Insekten darstellt.

EP 0 314 159 A1

## VERFAHREN ZUR VERARBEITUNG VON ANIMALISCHEN EXKREMENTEN, EIN GEMAESS DIESEM VERFAHREN ERHALTENES HOCHWERTIGES DUENGEMITTEL SOWIE DESSEN ANWENDUNG

Die vorliegende Erfindung betrifft ein neues chemischtechnologisches Verfahren zur Lösung von Wirtschafts-, Umwelt- und Gesundheitsproblemen, die durch animalische, insbesondere Schweine- und Geflügelexkremente bzw. Gülle verursacht werden. Diese Probleme werden durch die Verarbeitung der Exkremente in ein organisch-mineralisches Düngemittel gelöst, das weder die Grund- noch die Oberflächenwässer verunreinigt und dessen Anwendung den Boden verbessert, seine Fruchbarkeit steigert und seine Struktur optimiert.

Die wirtschaftliche Logik und die Marktbedürfnisse verlangen von den Landwirten eine spezialisierte Produktion, weil ihnen dadurch ein einträglicheres Wirtschaften und ein höherer Gewinnanteil ermöglicht werden.

Darum entscheiden sich die Viehzüchter für eine lokale Konzentration der Tiere, was zum Entstehen von Farmen mit einer extrem hohen Anzahl der Tiere (über 10 000 Schweine, über 100 000 Stück Geflügel, usw.) führt.

Die hohen Konzentrationen der Tiere an einer Stelle bringen zwar günstige wirtschaftliche Ergebnisse, andererseits verursachen sie jedoch ernste Umweltprobleme wegen der Anhäufung der Exkremente, die in unverarbeiteter Form nicht anwendbar sind. Bei der Zersetzung verbreiten sie einen unerträglichen Gestank in einer weiten Umgebung, verseuchen die Oberflächen- und Grundwässer und dienen als Eiablage und Nährboden für Insekte und pathogene Bakterien.

Das Problem ist infolge der erläuterten Tatsachen derart akut, dass man genötigt sein wird, auf Viehzucht, insbesondere Schweine- und Geflügelzucht, in grösseren Konzentrationen zu verzichten, wenn in kürzester Zeit keine geeignete Lösung gefunden wird. Das würde natürlich einen Fleischmangel bzw. eine Preiserhöhung auf dem Markt verursachen, wenn man bedenkt, dass über 90 % der Marktproduktion aus der Farmzucht stammt.

Ein weiteres Problem besteht darin, wie man dem Verbraucher eine genügende Menge eines hochwertigen Düngemittels zu einem erschwinglichen Preis zur Verfügung stellen könnte, da der Düngemittelpreis zum wesentlichen Produktionskostenaufwand gehört.

Forschungsinstitute, Engineering-Organisationen sowie Einzelforscher suchen weltweit intensiv nach Lösungen für oben angegebene Probleme, doch sind sie nach unseren Informationen bisher nicht ganz erfolgreich gewesen, was die folgenden Fälle bestätigen:

a) Das Sammeln der Exkremente und deren Verarbeitung durch Fermentierung zur Gülle in sog. Lagunen hat sich nicht nur als unwirksam, sondern auch als äusserst schädlich erwiesen. Die Gülle wird als flüssiges Düngemittel in einem Radius von 20 bis 30 km von der Lagune auf Felder transportiert. Da sie an Stickstoff in Nitrat- bzw. Nitritform reich ist, wird dieser in die Grundwässer ausgewaschen oder mit Oberflächenwässern in die nahen Brunnen und Bäche geschwemmt, darum weisen solche Regionen erheblich über 90 mg Nitrate/l Trinkwasser auf (es sind bis zu 50 mg Nitrate/l Trinkwasser erlaubt). Die Nitrate sind schädlich, da daraus im Organismus karzinogene Verbindungen entstehen und sie bei Kindern einen Sauerstoffmangel im Blut verursachen. Schäden werden auch beim Güllentransport verursacht, weil die schweren Tanks den Boden eindrücken und dadurch seine Struktur und Fruchtbarkeit beeinträchtigen.

b) Gemäss dem Verfahren "PIEPHO" (Wennigser Abwassertechnik GmbH, BRD) wird ein pulverförmiges Düngemittel, das 60% Kalk enthält, gewonnen, wobei während der Umsetzung $NH_3$ und Ammoniakwasser anfallen. Der Nachteil dieser Lösung sind die 60 % des Kalkes, der beim häufigen Streuen auf Feldflächen schädlich auf die Nutzpflanzen wirkt. $NH_3$ und insbesondere Ammoniakwasser häufen sich an, da die Frage deren Weiterverwendung nicht gelöst ist, was weiterhin ein Umweltproblem darstellt.

c) Die Lösung der Problems durch ein Verfahren zur Bindung des Stickstoffs mittels stark anaerober Fermentation und Erzeugung von Biogas oder mittels aerober heisser Fermentation mit Stroh- oder Sägemehlzugabe ist zwar theoretisch eine ganz gute Lösung, in der Praxis ist sie jedoch nicht annehmbar weil das Verfahren aufwendig und langwierig ist.

d) Die Lösung des Problems durch Lubrifikation: Dieser Prozess verläuft so, dass man einen geeigneten festen Anteil der Exkremente mit Regenwürmerkolonien besiedelt, die das Substrat in ein humusartiges organisches Düngemittel umwandeln. Dieses Verfahren ist langwierig, aufwendig, erfordert grosse Flächen und ist unter Umständen auf kleineren Bauernhöfen einsetzbar.

Aus der obigen Darstellung geht hervor, dass bisher noch kein technisches Verfahren offenbart worden ist, das auf eine zufriedenstellende Weise das Problem der animalischen, insbesondere Schweine- und Geflügelexkremente vom ökologischen, biologischen und technologisch-wirtschaftlichen Standpunkt lösen würde.

Das Ziel der vorliegenden Erfindung ist es, die oben angeführten Probleme derart zu lösen, dass Viehzucht einschliesslich der Produktion von Schweine und Geflügelfleisch auf Farmen, d.h. auch bei lokal sehr hohen Konzentrationen der Tiere, unter gleichzeitiger Produktion eines hochwertigen organischen bzw. organisch-mineralischen Düngemittels ohne Begleiterscheinungen möglich sein wird, die für die Anhäufung von animalischen, insbesondere Schweine- und Geflügelexkrementen bzw. der Gülle charakteristisch sind, vornehmlich die Verseuchung der Grund- und Oberflächenwässer.

Dieses Ziel wird gemäss der vorliegenden Erfindung derart realisiert, dass die Exkremente durch die Zugabe einer organischen Komponente, die an Huminsäuren reich ist, und nötigenfalls zusätzlich durch Chemikalien, die an Pflanzen-Makronährstoffen reich sind, gebunden werden, wobei ein komplexes Düngemittel in Pulver- oder Granulatform erhalten wird, das eine hohe Fertilisierungsqualität einschliesslich einer Bodenverbesserungsfähigkeit aufweist.

Gemäss der vorliegenden Erfindung wird nun ein neues Verfahren zur Verarbeitung von animalischen Exkrementen, wie z.B. Schweine-oder Geflügelexkrementen in ein hochwertiges Düngemittel offenbart, was eine Umweltschutzmassnahme darstellt.

In Abhängigkeit von der Provenienz enthalten wie Exkremente noch mehr oder weniger Eiweiss- oder Faserstoffe, ausserdem noch Federn oder Schüttstroh.

Das erfindungsgemässe Verfahren umfasst mehrere technologische Phasen, deren Reihenfolge ungeachtet der konkret gewählten Ausgangskomponenten des Düngemittels meistens gleich bleibt.

Beim erfindungsgemässen Verfahren werden als Komponente Nr. 1 animalische Exkremente, z.B. Schweine- und/oder Geflügelexkremente, verwendet, die in folgenden Formen vorkommen können:

a) feste animalische Exkremente, z.B. Schweine- und/oder Geflügelexkremente,

b) zähflüssige Exkremente,

c) die Gülle,

d) von der flüssigen Phase separierte Exkremente, was entweder im Stall mittels eines gesonderten Verfahrens bei der Entfernung des Mistes aus dem Stall oder in einem gesonderten Separator ausserhalb des Stalls ausgeführt wird.

Die oben angeführte Komponente wird in einem Mischreaktor mit mindestens einer organischen Komponente (die ausführlich in der älteren jugoslawischen Patentanmeldung P 1734/85 beschrieben ist, die ab 6. Mai 1987 der Öffentlichkeit zugänglich ist und von demselben Erfinder stammt), die an Huminsäuren reich ist, wie z.B. Lignit, Braunkohle, Torf, vermischt; es können auch zellulosereiche Stoffe, wie z.B. Stroh oder Sägemehl, zugegeben werden. Die organischen Humin- bzw. Zellulose-Komponenten sollten vorzugsweise auf einen Feuchtigkeitsgehalt von max. 25 % vorgetrocknet sein, sowie eine minimale Absorptionskapazität von 150 ml/100 g und eine höchstmögliche Pufferkapazität aufweisen. Zwecks verbesserter Reaktivität und auch Granulierung sollte die Teilchengrösse der organischen Komponenten (Exkremente, Humin- bzw. Zellulose-Komponenten) bevorzugt 4 mm nicht überschreiten.

Das Verhältnis zwischen den Exkrementen und den organischen Humin- bzw. Zellulose-Komponenten liegt vorteilhaft bei 3:1 bis 1:1 (Mass./Mass.).

Unter Umständen, d.h. in Abhängigkeit vom Anwendungsbereich des Endproduktes, ist es günstig, den organischen Komponenten, d.h. den Exkrementen und den Humin- bzw. Zellulose-Komponenten, auch eine anorganische Komponente in einer Menge, die bevorzugt 18% (Masse) im Bezug auf die Gesamtmischung nicht überschreitet, zuzugeben. Die anorganische Komponente umfaßt Verbindungen, die Makroelemente wie $N_2$, $P_2O_5$ und $K_2O$ sowie bevorzugt auch Mikroelemente wie Cu, Fe, Mg, Mo, Co und B liefern. Ein geeigneter Aggregatzustand wird ggf. durch die Zugabe von hochabsorptiven Ton, wie z.B. Bentonit oder Zeolith, erzielt, wobei die bevorzugte Menge 2 Masse % im Bezug auf die Gesamtmischung nicht übersteigt.

Obwohl schon die Verbindungen, die Makroelemente $N_2$, $P_2O_5$ und $K_2O$ liefern, die pathogenen Bakterien vernichten, kann ggf. zusätzlich noch CaO, bevorzugt bis zu 2 Masse %, im Bezug auf die Gesamtmischung, verwendet werden, um die bakterizide Wirkung zu steigern.

Die Reaktion zwischen den einzelnen Inhaltsstoffen der Komponenten verläuft etwa 30 Minuten unter mässigem Rühren, bevorzugt bis zu 240 Umdrehungen/Min. Es muß darauf geachtet werden, dass die Temperatur bei der exothermen Reaktion 50°C nicht übersteigt.

Nach der beendeten Reaktion wird das Produkt ggf. granuliert und das Granulat- bzw. Schüttprodukt wird getrocknet, wobei die Temperatur des Endproduktes - Düngemittels 60°C nicht überschreiten soll.

Die Erfindung soll aufgrund des beiliegenden Schemas, das die technologischen Phasen und deren Reihenfolge beim Verfahren zur Herstellung eines neuen organisch-mineralischen Düngemittels darstellt, näher beschrieben und erläutert werden.

In der beiligenden Zeichnung bedeuten die Nummern 1, 2, 3 und 4 die einzelnen Dosierungseinrichtungen für die Ausgangskomponenten, und zwar:

1 - Dosierungseinrichtung für animalische, z.B. Schweine-und Geflügelexkremente bzw. Mist (d.h. dass die Exkremente ggf. auch Beimischungen wie Federn, Streu usw. enthalten können),

2 - Dosierungseinrichtung für die organische Humuskomponente, die ggf. bis zu 2 % eines hochabsorptiven Tons enthält,

3,3a - Dosierungseinrichtungen für die feste bzw. flüssige anorganische Komponente, die Makroelemente wie $N_2$, $P_2O_5$, $K_2O$ und ggf. Mikroelemente liefert,

4 - Dosierungseinrichtung für CaO.

Als $N_2$-, $P_2O_5$- und $K_2O$-Quellen werden z.B. $NH_4$-Verbindungen, $HNO_3$, Harnstoff (Urea), KOH, $H_3PO_4$, $K_2SO_4$, KCl, Thomasschlacke, Rohphosphate usw. verwendet. Als hochabsorptive Tone können z.B. Bentonite, Zeolithe u.ä. eingesetzt werden.

Die oben angeführten Ausgangskomponenten werden nach und nach in den Mischungsreaktor 5, worin die exotherme Reaktion unter einem kontinuierlichen, mässigen Rühren von bis zu 240 U./Min. verläuft, derart eindosiert, dass die Temperatur im Reaktor 50°C nicht übersteigt. Falls höhere Mengen an pathogenen Bakterien anwesend sind, wird allmählich in kleineren Mengen (bis zu 2 % der Gesamtmischung) CaO zugegeben. Ggf. werden die Exkremente aus der Dosierungseinrichtung 1 vorher in die Zerschneidungsvorrichtung 5a transportiert, worin sie auf Teilchen bis zu 4 mm zerkleinert werden.

Aus dem Mischungsreaktor 5 wird das Schüttmaterial in den Granulator 6 geführt. Das Granulat wird aus dem Granulator 6 in den Trockner 7, worin es bis zu 25 % Feuchtigkeit getrocknet wird, geführt, wobei die Temperatur des Produktes während der Trocknung 60°C nicht übersteigen darf. Wenn schon im Reaktor ein granuliertes Produkt anfällt, wird es direkt dem Trockner zugeführt.

Das getrocknete Granulat lässt man abkühlen und führt es in die Verpackungsanlage. Das granulierte organisch-mineralische Düngemittel ist somit anwendungsfertig oder kann gelagert werden.

Das Endprodukt, das einen weiteren Gegenstand der Erfindung darstellt, ist ein hochwertiges organisches(-mineralisches) Düngemittel, dass auch vom wirtschaftlichen Standpunkt für längere (auch interkontinentale) Transporte geeignet ist.

Ein weiterer Gegenstand der Erfindung ist die Anwendung des neuen organischen(-mineralischen) Düngemittels, das gemäss dem beanspruchten Verfahren hergestellt wird, zwecks Bodenverbesserung und Steigerung der Fruchtbarkeit, wobei es ganz oder teilweise die Düngung mit mineralischen und/oder organischen Düngemitteln ersetzt. Die Topfversuche mit den Produkten der folgenden Beispiele I bis V auf Buchweizen , und Raps haben ergeben, dass es in der Wirkung den klassischen Mineraldüngemitteln mindestens gleichwertig ist und zusätzlich den Vorteil der Bodenverbessung und der Steigerung dessen Fruchtbarkeit aufweist.

Die durchgeführten Versuche haben ergeben, dass durch das erfindungsgemässe Verfahren das Problem der Gülle in technologischer, wirtschaftlicher, ökologischer sowie gesundheitlicher Hinsicht gelöst wird.

Es soll betont werden, dass in der Beschreibung und in den Ansprüchen der vorliegenden Erfindung die Bezeichnung "animalische Exkremente" alle Arten von Exkrementen der Haustiere, nämlich Rinder-, Pferde-, Schweine-, Schaf- und Federvieh-, d.h. Geflügel- und Taubenexkremente, sowie menschliche Exkremente bedeuten soll. In den folgenden Ausführungsbeispielen, die die Erfindung erläutern, jedoch keineswegs einschränken sollen, werden die am meisten problematische Exkremente, nämlich Schweine- und Geflügelexkremente, die per se am wenigsten zum Düngen geeignet sind, als die animalische organische Komponente eingesetzt.

Beispiele I bis V

Das Verfahren zur Herstellung des organisch-mineralischen Düngemittels wurde in einem PFMR-50 bzw. in einem Reaktor mit ähnlichen Charakteristika ausgeführt. Der Reaktor wirkte gleichzeitig als Mischer, unter günstigen Bedingungen auch als Granulator.

Auf die organische Humuskomponente (Braunkohle, Torf) der Fraktion unter 4 mm wurden abwechselnd die animalischen Exkremente (Schweine-, Geflügelmist), ggf. unter gleichzeitiger kontinuierlicher, gleichmässiger und abwechselnder Zugabe der mineralischen Komponente, die $N_2$, $P_2O_5$ und $K_2O$ (ggf. auch die Mikroelemente) liefert, unter Rühren bis zu 240 U./Min. während 30 Minuten dosiert.

Die mineralischen Komponenten wurden folgenderweise dosiert: zunächst KOH (etwa 4 Min.), danach Orthophosphorsäure (etwa 4 Min.), dann Urea (etwa 2 Min.), anschliessend NH₃K-Salz, Thomasschlacke, CaO usw. im Laufe von etwa 2 Min. Die Dosierung der flüssigen und gasförmigen Komponenten hatte eine exotherme Reaktion zur Folge, wobei das Verfahren derart zu führen war, dass die Temperatur 50°C nicht überstieg und das gesamte Produkt homogenisiert war.

Nach beendeter Reaktion wurde das Produkt - falls es in Schütt- oder "Teig"-Form anfiel - in den Granulator zwecks Tablettierung geführt. Das bei der Granulierung entstandene Granulat wurde auf Ø 3-4 mm Siebe geführt. Der Siebrückstand (unter 3 mm und über 4 mm) wurde in den Reaktor zurückgeführt, ggf. nach vorheriger Zerkleinerung.

Das gesiebte Granulat (3-4 mm) wurde dem Trocknungsprozess bis zu einer Feuchtigkeit von bis 20 % (unter besonderen Umständen auch bis zu 25 %) unterworfen.

Bei der Trocknung war sorgsam darauf zu achten, dass die Temperatur 60°C nicht überschritt.

| Tabellarische Darstellung der Beispiele I bis V | | | | | |
|---|---|---|---|---|---|
| Komponente | Beispiel I | Beispiel II | Beispiel III | Beispiel IV | Beispiel V |
| Braunkohle, trocken | 40,00 kg | 38,00 kg | 40,00 kg | 25,00 kg | 40,00 kg |
| Torf oder Sägemehl | - | - | - | 20,00 kg | - |
| Schweineexkremente | 70,00 kg | - | 30,00 kg | 70,00 kg | 30,00 kg |
| Geflügelexkremente | - | 60,00 kg | 40,00 kg | - | 40,00 kg |
| Orthophosphorsäure 70-75 %, 51-54 % $P_2O_5$ | 15,00 kg | 14,00 kg | - | 15,00 kg | 14,00 kg |
| Kalilauge 50-60 %, 42-51 % $K_2O$ | 8,00 kg | 7,00 kg | - | 8,00 kg | 6,00 kg |
| Kaliumsalz, 40 % $K_2O$ | 5,00 kg | 6,00 kg | - | 5,00 kg | 5,00 kg |
| Thomasschlacke, 16 % $P_2O_5$ | 8,00 kg | 10,00 kg | - | 8,00 kg | 10,00 kg |
| Urea, 46 % N | 17,00 kg | 18,00 kg | - | 16,00 kg | 15,00 kg |
| CaO | 5,00 kg | 5,00 kg bis 10 kg | | 5,00 kg | 5,00 kg |
| Bentonit | - | - bis 10 kg | | - bis 10 kg | |
| Gesamt | 168,00 kg | 158,00 kg | 130,00 kg | 172,00 kg | 175,00 kg |

Die obigen Beispiele sollten nicht einschränkend sein, da die Zusammensetzung breit variiert werden kann. Der Zusatz der Mineralkomponenten ist vom Bedarf an NPK-Werten bzw. von diesen NPK-Werten in den Schweine- und Geflügelexkrementen abhängig. Ggf. werden bei jedem der obigen Beispiele I bis V die Reaktionsmischungen durch Spurenmikroelemente versetzt.

Der Zusatz von organischen Humus- bzw. Zellulosekomponenten sowie von Tonkomponenten bzw. von CaO hängt von der Viskosität der animalischen Exkremente bzw. vom Anwendungsbereich des Düngemittels ab.

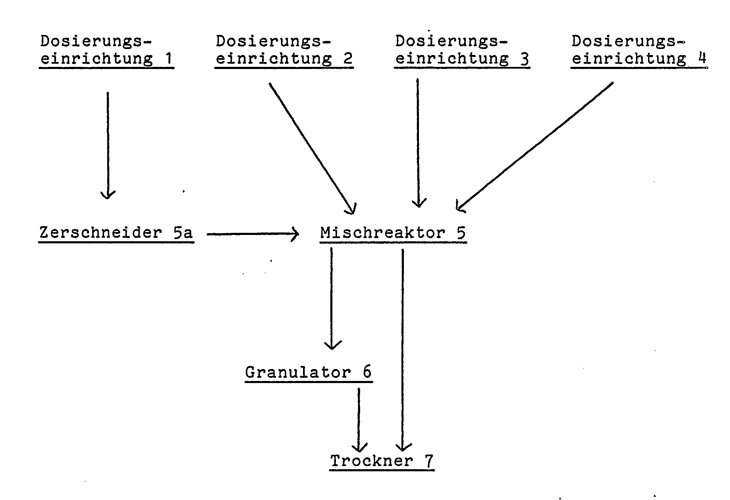

## Ansprüche

1. Verfahren zur Verarbeitung von animalischen, insbesondere Schweine- und Geflügelexkrementen, dadurch **gekennzeichnet,** daß die animalischen Exkremente mit mindestens einer an Huminsäuren reichen organischen Komponente (organische Humin-Komponente) und/oder mindestens einer Zellulose-Komponente unter mässigen Rühren vermengt und bei einer maximalen Temperatur von 50°C umgesetzt werden, und anschließend das erhaltene Schütt- oder Teigprodukt granuliert bei einer Temperatur von bis zu 60°C getrocknet wird.

2. Verfahren nach Anspruch 1, dadurch **gekennzeichnet,** daß die organische Humin-Komponente aus der Gruppe Lignit, Braunkohle, Torf ausgewählt wird.

3. Verfahren nach Anspruch 1, dadurch **gekennzeichnet,** daß die Zellulose-Komponente aus der Gruppe Stroh, Sägemehl ausgewählt wird.

4. Verfahren nach einem oder mehreren der vorhergehenden Ansprüche, dadurch **gekennzeichnet,** daß die Humin-Komponenten und/oder die Zellulose-Komponenten auf einen Feuchtigkeitsgehalt von maximal 25% vorgetrocknet werden und eine Mindestabsorptionskapazität von 150 ml/100g besitzen.

5. Verfahren nach einem oder mehreren der vorhergehenden Ansprüche, dadurch **gekennzeichnet,** daß das Verhältnis zwischen den animalischen Exkrementen und den organischen Humin- bzw. Zellulose-Komponenten auf 3:1 bis 1:1 (Masse:Masse) eingestellt wird.

6. Verfahren nach einem oder mehreren der vorhergehenden Ansprüche, dadurch **gekennzeichnet**, daß die Teilchengröße der Humin- bzw. Zellulose-Komponenten und der animalischen Exkremente höchstens 4 mm beträgt.

7. Verfahren nach einem oder mehreren der vorhergehenden Ansprüche, dadurch **gekennzeichnet**, daß zusätzlich eine anorganische Komponente beigemengt wird, die die Makroelemente $N_2$, $P_2O_5$ und $K_2O$ liefert.

8. Verfahren nach Anspruch 7, dadurch **gekennzeichnet**, daß die anorganische Komponente die Mikroelemente Cu, Fe, Mg, Mo, Co und/oder B in Spuren liefert.

9. Verfahren nach einem oder mehreren der vorhergehenden Ansprüche, dadurch **gekennzeichnet**, daß zusätzlich hochabsorptiver Ton beigemengt wird.

10. Verfahren nach einem oder mehreren der vorhergehenden Ansprüche, dadurch **gekennzeichnet**, daß zusätzlich CaO zugesetzt wird.

11. Verfahren nach einem oder mehreren der vorhergehenden Ansprüche, dadurch **gekennzeichnet**, daß bei einer maximalen Umdrehungszahl von 240 U/Min. gerührt wird.

12. Hochwertiges Düngemittel, dadurch **gekennzeichnet**, daß es über ein Verfahren gemäß einem oder mehreren der vorhergehenden Ansprüche 1 bis 11 erhältlich ist.

13. Verwendung des Düngemittels, erhältlich nach einem Verfahren gemäß einem oder mehreren der vorhergehenden Ansprüche 1 bis 11, zur Verbesserung und Fertilitätssteigerung des Bodens.

Dosierungs-       Dosierungs-       Dosierungs-       Dosierungseinrichtung 1     einrichtung 2     einrichtung 3     einrichtung 4

Zerschneider 5a  ⟶  Mischreaktor 5

Granulator 6

Trockner 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | NL-A-6 900 878 (W. POLMAN) * Seite 3, Zeilen 9-13; Seite 3, Zeile 27 - Seite 4, Zeile 9; Seite 4, Zeilen 24-27; Ansprüche * | 1-3,8, 12,13 | C 05 F 13/00 C 05 F 3/00 |
| Y | | 4,5,7,9 -11 | |
| Y | DE-A-1 957 733 (G. MELZL) * Seiten 2,3 * | 5 | |
| Y | FR-A-2 156 888 (C.N. WATERS et al.) * Ansprüche; Seite 2, Zeile 32 - Seite 3, Zeile 2 * | 10,11 | |
| Y | FR-A-2 132 542 (R.R. ALLIOT) * Seite 1, Zeilen 30-33; Seite 2, Zeile 22 - Seite 3, Zeile 23 * | 4,5,7 | |
| X | DE-A-3 309 004 (TP BIO-VEGETAL DÜNGE- UND NAHRUNG SMITTELVERTRIEBS GmbH) * Ansprüche; Seite 7, Zeile 26 - Seite 8, Zeile 29 * | 1,6,8, 12,13 | |
| A | DE-A-1 592 684 (KOCH CONTRACT GmbH) * Seiten 1,2 * | | RECHERCHIERTE SACHGEBIETE (Int. Cl.4) C 05 F C 05 G |
| Y | DE-A-2 342 999 (U. FINSTERWALDER) * Seite 3; Ansprüche * | 9 | |

Der vorliegende Recherchenbericht wurde für alle Patentansprüche erstellt

| Recherchenort | Abschlußdatum der Recherche | Prüfer |
|---|---|---|
| DEN HAAG | 04-02-1989 | SCHUT,R.J. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
........................................................................................
& : Mitglied der gleichen Patentfamilie, übereinstimmendes
   Dokument

EPO FORM 1503 03.82 (P0403)